# EUROPÄISCHE PATENTSCHRIFT

(11) **EP 0 385 186 B1**
(45) Veröffentlichungstag und Bekanntmachung des Hinweises auf die Patenterteilung: **09.03.1994**
(21) Anmeldenummer: 90102883.7
(22) Anmeldetag: 14.02.1990
(51) Int. Cl.: G21C 19/07

(54) **Brennelement-Lagergestell**
Fuel element storage rack
Râtelier de stockage pour assemblage de combustible

(30) Priorität: 01.03.1989 DE 3906491
(43) Veröffentlichungstag der Anmeldung: 05.09.1990
(73) Patentinhaber: SIEMENS AKTIENGESELLSCHAFT, 80333 München (DE)
(72) Erfinder: Blösser, Hans-Georg, D-6050 Offenbach (DE); Rudnick, Karl-Heinz, D-6072 Dreieich (DE)

(56) Entgegenhaltungen:
- EP-A- 0 023 742
- WO-A-80/00046
- FR-A- 2 433 225
- US-A- 4 029 968

## Beschreibung

Die Erfindung betrifft ein Brennelement-Lagergestell mit einem äußeren Rahmen, der vertikale Rohre einschließt, die dem Brennelementquerschnitt angepaßt sind und ein Raster von Brennelementpositionen bilden, wobei der Rahmen an seinem oberen Ende Transportösen aufweist und an seinem unteren Ende eine horizontale Stützplatte umfaßt, auf der die Rohre aufsitzen.

Bei dem aus der US-PS 40 29 968 bekannten Lagergestell der oben genannten Art bilden die Rohre über den Gestellquerschnitt verlaufende Zwischenräume, in denen neutronenabsorbierende Platten untergebracht sind. Dies ergibt einen komplizierten Aufbau, zumal auch der Rahmen aus einzelnen Platten und Streben zusammengesetzt ist, die aufwendig miteinander verbunden werden müssen.

Gegenüber dem Bekannten besteht die Aufgabe der Erfindung darin, ein Brennelement-Lagergestell zu schaffen, das ohne Beeinträchtigung der Strahlensicherheit und der mechanischen Festigkeit einfacher aufgebaut ist als die bekannten Brennelementlagergestelle und möglichst wenig Platz erfordert.

Erfindungsgemäß ist vorgesehen, daß die Rohre eine Bodenplatte aufweisen, mit der sie an der Stützplatte befestigt sind, so daß sie ohne distanzierende Zwischenlagen mit ihren vertikalen Wandflächen parallel zueinander und zu dem Rahmen verlaufen, und daß der Rahmen von einem Blechmantel gebildet wird, der an seinem oberen Bereich auf mindestens das Doppelte nach außen verdickt ist.

Bei der Erfindung ergibt der Blechmantel einen Rahmen von einfacher Bauart, der mit seinen Innenflächen eine sichere Abstützung der Rohre ermöglicht. Die mit dem Rahmen verbundene Stützplatte, die ohnehin eine für das Tragen der Brennelemente und Rohre ausreichende Festigkeit haben muß, dient zur Festlegung der Rohre, so daß keine Zwischenlagen oder dergleichen benötigt werden. Die Rohre können vorteilhaft aneinander anliegen, damit Seitenkräfte unmittelbar über die Rohrflächen auf den Blechmantel übertragen werden. Es ist aber auch möglich, zwischen den Rohren einen Abstand zu haben, der bei der Unterbringung der Lagergestelle in einem Wasserbecken einen Wasserspalt bildet. Es hat sich nämlich gezeigt, daß angesichts des Schlankheitsgrades der Rohre, d. h., wegen der großen Länge im Verhältnis zum Rohrquerschnitt, seitliche Auslenkungen der Rohre tolerierbar sind, die den Wasserspalt überbrücken, so daß wiederum Seitenkräfte über die Rohre auf den Blechmantel übertragen werden können.

Die Rohre können vorteilhaft in ihren vertikalen Wandflächen Durchbrechungen aufweisen, die mit Ausnehmungen in den Blechmantel fluchten. Damit entstehen in bekannter Weise Kanäle für den Durchtritt von Kühlwasser. Man kann aber auch entsprechende Ausnehmungen in den Bodenplatten und der Stützplatte vorsehen, wenn damit die gewünschte Kühlmittelströmung zu erhalten ist.

Die Bodenplatte kann durch eine zentrale Schraubverbindung mit der Stützplatte lösbar verbunden sein. Dies hat den Vorteil, daß eine einzige Schraubverbindung für jedes der Rohre ausreicht. Zweckmäßigerweise umfaßt die Schraubverbindung einen an der Bodenplatte befestigten Gewindebolzen, der auf der dem Rohr abgekehrten Seite der Stützplatte eine Mutter trägt. Hier ist es günstig, daß das Befestigen und Lösen der Schraubverbindung von der Unterseite der Stützplatte her ohne Behinderung durch die langen und schlanken Rohre erfolgt.

Eine wichtige Ausführungsform der Erfindung besteht darin, daß der Gestellquerschnitt quadratisch ist und ein Brennelementraster von höchstens 8x8 Brennelementpositionen umfaßt. Es hat sich nämlich gezeigt, daß solche Lagergestelle mit geringem Aufwand wesentlich einfacher herzustellen sind als die aus der US-Patentschrift 40 29 968 bekannten Lagergestelle mit einem schmalen Rechteckquerschnitt, in dem drei Reihen mit je 12 Brennelementpositionen in ungleichmäßigem Abstand angeordnet sind.

Zur Erhöhung der Festigkeit der Stützplatte weist diese vorteilhaft rasterförmig verlaufende Rippen auf, wobei an den Kreuzungsstellen der Rippen Fußteile angreifen können. Dabei ist es günstig, wenn die Fußteile Einschnitte entsprechend dem Verlauf der Rippen aufweisen, die die Rippen seitlich umschließen. Hierdurch wird die Festlegung in seitlicher Richtung mit denkbar geringem Aufwand erreicht. Ein weiterer Vorteil besteht darin, daß Stütz- und Seitenkräfte großflächig eingeleitet werden, so daß örtliche Überbeanspruchungen ausgeschlossen sind.

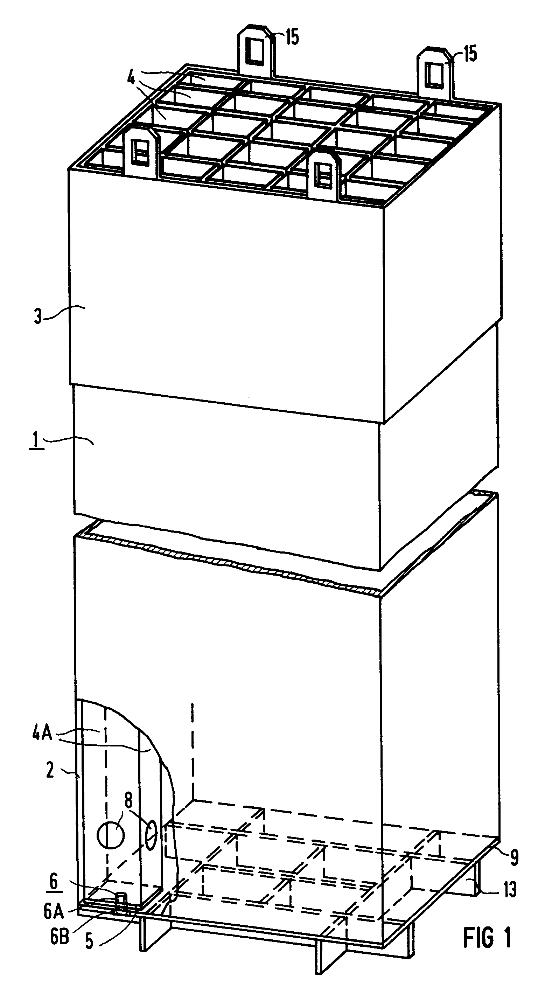

Zur näheren Erläuterung der Erfindung wird anhand der Zeichnung ein Ausführungsbeispiel beschrieben. Dabei zeigt
FIG 1 ein Brennelement-Lagergestell in einer perspektivischen Darstellung,
FIG 2 einen Teilschnitt in vertikaler Richtung und
FIG 3 einen Blick auf die Unterseite der Stützplatte, der die Ausbildung der Abstützung des Lagergestells erkennen läßt.

Der Rahmen 1 wird von einem glattwandigen, im Querschnitt quadratischen Blechmantel 2 gebildet, der aus nichtrostendem Stahl besteht. Im oberen Querschnittsbereich 3 des Blechmantels 2 verdickt sich das Material der Wandung über ca. 1/9 der Gesamthöhe von 4,5 m als Folge eines Blechstoßes um das 3-fache der unteren Blechdicke, die 5 mm beträgt. Die Verdickung liegt ausschließlich auf der Außenseite, so daß die Innenseite des Blechmantels 2 glatt ist. Innerhalb dieses glatten quadratischen Blechmantels befinden sich im dargestellten Falle 25 Rohre 4 mit quadratischem Querschnitt, deren Blechhüllen aus neutronenabsorbierendem Material bestehen. Die Blechdicke beträgt z.B. 2 mm. 10 mm dick ist eine angeschweißte Bodenplatte 5, die dem Rohrquerschnitt entsprechend eine Kantenlänge von 15 cm hat.

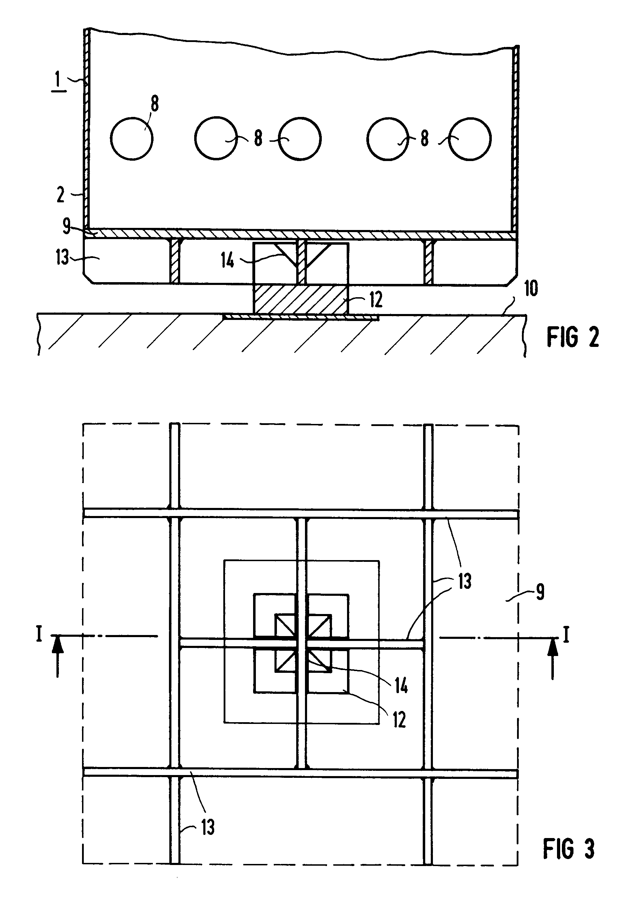

Die Absorberrohre 4 sind im unteren Bereich, d.h. in der Nähe der Bodenplatte 5, an allen vier vertikalen Wandflächen 4A mit Durchbrechungen 8 versehen, damit das Kühlwasser an die im Inneren befindlichen, in der Figur nicht dargestellten Brennelemente von Siedewasserreaktoren gelangen kann, dem der Querschnitt der Rohre 4 angepaßt ist. Korrespondierende Ausnehmungen 8 befinden sich im unteren Bereich des Blechmantels 2, wie in FIG 2 dargestellt ist.

An den Bodenplatten 5 der einzelnen Absorberrohre 4 sind in der Mitte des Rohrquerschnittes zur Befestigung an einer Stützplatte 9 des Rahmens 1 Gewindebolzen 6A befestigt, z.B. angeschweißt. Damit werden die Rohre 4 von der Unterseite der Stützplatte 9 aus mit einer Mutter 6B verschraubt. Die zentrale Schraubverbindung 6 hält die Rohre 4 ohne distanzierende Zwischenlagen in dem an der Oberseite des Lagergestells ersichtlichen Raster von Brennelementpositionen.

Auf dem Boden 10 des für das Abstellen der Lagergestelle vorgesehenen Lagerbeckens sind entsprechend der Anzahl der aufzunehmenden Gestelle viereckige Fußteile 12 befestigt, in die rasterförmig angeordnete Rippen 13 der Stützplatte 9 des Gestells eingreifen, wie in FIG 2 und 3 gezeigt ist. Man erkennt die von der Mitte der Fußteile 12 her keilförmig aufgeweiteten Einschnitte 14, die die Rippen 13 in der Mitte der Stützplatte 9 seitlich umschließen und damit auch seitlich festlegen.

Das Gestell wird in bekannter Weise durch ein Hebezeug in das dafür vorgesehene Becken gehoben. Für diesen Vorgang sind am Blechmantel 2 vier Trageösen 15 befestigt, die innerhalb des Konstruktionsquerschnittes des Blechmantels liegen. Eine besondere Verriegelung des Gestells in seinem Auflagepunkt ist wegen der in FIG 2 und 2 dargestellte Auflagerung nicht notwendig.

## Patentansprüche

1. Brennelement-Lagergestell mit einem äußeren Rahmen (1), der vertikale Rohre (4) einschließt, die dem Brennelementquerschnitt angepaßt sind und ein Raster von Brennelementpositionen bilden, wobei der Rahmen (1) an seinem oberen Ende Transportösen (15) aufweist und an seinem unteren Ende eine horizontale Stützplatte (9) umfaßt, auf der die Rohre (4) aufsitzen, **dadurch gekennzeichnet,** daß die Rohre (4) eine Bodenplatte (5) aufweisen, mit der sie an der Stützplatte (9) befestigt sind, so daß sie ohne distanzierende Zwischenlagen mit ihren vertikalen Wandflächen (4A) parallel zueinander und zu dem Rahmen (1) verlaufen, und daß der Rahmen (1) von einem Blechmantel (2) gebildet wird, der an seinem oberen Bereich (3) auf mindestens das Doppelte nach außen verdickt ist.

2. Brennelement-Lagergestell nach Anspruch 1, **dadurch gekennzeichnet,** daß die Rohre (4) in ihren vertikalen Wandflächen (4A) Durchbrechungen (7) aufweisen, die mit Ausnehmungen (8) in dem Blechmantel (2) fluchten.

3. Brennelement-Lagergestell nach Anspruch 1 oder 2, **dadurch gekennzeichnet,** daß die Bodenplatte (5) durch eine zentrale Schraubverbindung (6) mit der Stützplatte (9) lösbar verbunden ist.

4. Brennelement-Lagergestell nach Anspruch 3, **dadurch gekennzeichnet,** daß die Schraubverbindung (6) einen an der Bodenplatte (5) befestigten Gewindebolzen (6A) umfaßt, der auf der dem Rohr (4) abgekehrten Seite der Stützplatte (9) eine Mutter (6B) trägt.

5. Brennelement-Lagergestell nach einem der Ansprüche 1 bis 4, **dadurch gekennzeichnet,** daß der Gestellquerschnitt quadratisch ist und ein Brennelementraster von höchstens 8x8 Brennelementpositionen umfaßt.

6. Brennelement-Lagergestell nach einem der Ansprüche 1 bis 5, **dadurch gekennzeichet,** daß die Unterseite der Stützplatte (9) rasterförmig verlaufende Rippen (13) aufweist, und daß an Kreuzungsstellen der Rippen (13) Fußteile (12) angreifen.

7. Brennelement-Lagergestell nach Anspruch 6, **dadurch gekennzeichnet,** daß die Fußteile (12) Einschnitte (14) entsprechend dem Verlauf der Rippen aufweisen, die die Rippen (13) seitlich umschließen.

## Claims

1. A fuel element storage rack with an outer frame (1), which comprises vertical tubes (4), which are adapted to the fuel element cross-section and form a grid of fuel element positions, wherein the frame (1) has transport eyelets (15) on its upper end and a horizontal supporting plate (9) on its lower end, on which the tubes (4) sit,
characterised in that the tubes (4) have a base plate (5), with which they are secured to the supporting plate (9), so that they extend without separating intermediate layers with their vertical wall surfaces (4A) parallel to each other and to the frame (1) and in that the frame (1) is formed by sheet metal jacket (2) which is thickened outwards at its upper region (3) to at least double (thickness).

2. A fuel element storage rack according to claim 1, characterised in that the tubes (4) have perforations (7) in their vertical wall surfaces (4A), which are aligned with recesses (8) in the sheet metal jacket (2).

3. A fuel element storage rack according to claim 1 or 2, characterised in that the base plate (5) is connected detachably by a central screw connection (6) to the supporting plate (9).

4. A fuel element storage rack according to claim 3, characterised in that the screw connection (6) comprises a threaded bolt (6A) secured to the base plate (5), which, on the side of the supporting plate (9) facing away from the tube (4), supports a nut (6B)

5. A fuel element storage rack according to one of claims 1 to 4, characterised in that the rack cross-section is quadrate, and comprises a fuel element grid of at the most 8x8 fuel element positions.

6. A fuel element storage rack according to one of claims 1 to 5, characterised in that the lower side of the supporting plate (9) has ribs (13) extending like a grid and in that foot parts (12) engage at the intersection points of the ribs (13).

7. A fuel element storage rack according to claim 6, characterised in that the foot parts (12) have incisions (14) corresponding to the course of the ribs, which enclose the ribs (13) laterally.

## Revendications

1. Râtelier de stockage d'assemblages combustibles, comportant un cadre (1) extérieur, qui entoure des tubes (4) verticaux, adaptés à la section transversale des assemblages combustibles et formant un quadrillage de positions d'assemblages combustibles, le cadre (1) comportant à son extrémité supérieure des anneaux de transport (15) et entourant à son extrémité inférieure un plateau (9) horizontal d'appui sur lequel reposent les tubes (4),
caractérisé
en ce que les tubes (4) comportent une plaque de fond (5), par laquelle ils sont fixés au plateau (9) d'appui de manière que leurs surfaces (4A) verticales de paroi s'étendent parallèlement entre elles et au cadre (1) sans couche intermédiaire intercalaire, et en ce que le cadre (1) est formé d'une enveloppe (2) en tôle, dont la partie supérieure (3) est épaissie vers l'extérieur d'au moins du double.

2. Râtelier de stockage d'assemblages combustibles suivant la revendication 1
caractérisé en ce que les surfaces (4A) verticales de paroi des tubes (4) comportent des passages (7) alignés avec des trous (8) ménagés dans l'enveloppe (2) en tôle.

3. Râtelier de stockage d'assemblages combustibles suivant la revendication 1 ou 2,
caractérisé en ce que la plaque (5) de fond est reliée de manière amovible au plateau (9) d'appui par un vissage (6) central.

4. Râtelier de stockage d'assemblages combustibles suivant la revendication 3,
caractérisé en ce que le vissage (6) comporte un axe fileté (6A) qui est fixé à la plaque de fond (5) et qui porte un écrou (6B) du côté du plateau d'appui (9) éloigné du tube (4).

5. Râtelier de stockage d'assemblages combustibles suivant l'une des revendications 1 à 4
caractérisé en ce que la section transversale du râtelier est carrée et entoure un quadrillage d'assemblages combustibles d'au plus 8 x 8 positions d'assemblages combustibles.

6. Râtelier de stockage d'assemblages combustibles suivant l'une des revendications 1 à 5,
caractérisé en ce que la face inférieure du plateau (9) d'appui comporte des nervures (13) s'étendant en forme de quadrillage et en ce que des pieds (12) attaquent les points d'intersection des nervures (13).

7. Râtelier de stockage d'assemblages combustibles suivant la revendication 6,
caractérisé en ce que les pieds (12) comportent des entailles (14) correspondant au profil des nervures et qui entourent latéralement les nervures (13).
